# EUROPÄISCHE PATENTANMELDUNG

(11) **EP 4 762 903 A1**
(43) Veröffentlichungstag der Anmeldung: **24.06.2026**
(21) Anmeldenummer: 25224140.1
(22) Anmeldetag: 16.12.2025
(51) Int. Cl.: A01D 17/10, A01D 33/08

(54) **HACKFRUCHTTRENNVORRICHTUNG UND HACKFRUCHTERNTEMASCHINE**

(30) Priorität: 20.12.2024 DE 202024107511 U
(71) Anmelder: Grimme Landmaschinenfabrik GmbH & Co. KG, 49401 Damme (DE)
(72) Erfinder: Dettmer, Franz-Josef, 49577 Ankum (DE); Kolbeck, Ludger, 49401 Damme-Rüschendorf (DE)
(74) Vertreter: Wischmeyer, André

(57) **Zusammenfassung**

Die Erfindung betrifft eine Hackfruchttrennvorrichtung (8) zur Trennung eines Gutstroms in Kraut und Hackfrüchte, umfassend ein erstes Förderband (12), das an einem Maschinenrahmen (3) gelagert ist und das einen ersten Förderabschnitt (16) zwischen einer ersten (18) und einer zweiten Umlenkeinheit (20) ausbildet, wobei im Betrieb im ersten Förderabschnitt das auf dem ersten Förderband aufliegende Erntegut in Richtung eines zweiten, am Maschinenrahmen gelagerten Förderbandes (14) gefördert wird, wobei das zweite Förderband zwischen einer oberen (28) und einer unteren Umlenkeinheit (30) einen schräg gestellten zweiten Förderabschnitt (26) ausbildet, wobei im Betrieb ein Teil des Ernteguts entgegen der Schwerkraft den zweiten Förderabschnitt hoch gefördert und ein weiterer Teil des Ernteguts sich schwerkraftbedingt nach unten bewegt, wobei zumindest einem der beiden Förderbänder wenigstens ein Stellmittel (38) zugeordnet ist, über das wenigstens eine Führungseinheit (36) dieses Förderbandes dergestalt verstellbar ist, dass sich durch dessen Betätigung die Ausrichtung zweier Teilabschnitte(42, 44) des Förderabschnitts zueinander ändert.

## Beschreibung

Die vorliegende Erfindung betrifft eine Hackfruchttrennvorrichtung, insbesondere einen Feinkrautelevator, zur Trennung eines Gutstroms in Kraut und Hackfrüchte, umfassend ein insbesondere als Siebband ausgebildetes erstes Förderband, das an einem Maschinenrahmen der Hackfruchttrennvorrichtung gelagert ist und das einen ersten Förderabschnitt zwischen einer ersten Umlenkeinheit und einer zweiten Umlenkeinheit (des ersten Förderbandes) ausbildet, wobei im Betrieb im ersten Förderabschnitt das auf dem ersten Förderband aufliegende Erntegut in Richtung eines zweiten, am Maschinenrahmen insbesondere schräg beweglich gelagerten Förderbandes der Hackfruchttrennvorrichtung gefördert wird, wobei das zweite Förderband, insbesondere ein Igelband, zwischen einer oberen und einer unteren Umlenkeinheit (des zweiten Förderbandes) einen schräg gestellten zweiten Förderabschnitt ausbildet, wobei im Betrieb ein Teil des Ernteguts insbesondere in Form von Kraut von dem umlaufenden zweiten Förderband entgegen der Schwerkraft den zweiten Förderabschnitt hochgefördert wird und ein weiterer Teil des Ernteguts insbesondere in Form von Hackfrüchten sich schwerkraftbedingt entgegen der Bewegung des zweiten Förderbandes nach unten bewegt.

Aus der DE 102018127845 A1 ist es bekannt, die Aggressivität der Trennung mittels einer Hackfruchttrennvorrichtung umfassend ein Feinkrautband durch einen Anstellwinkel des zweiten Förderbandes oder durch die Umlaufgeschwindigkeit des Förderbandes anzupassen.

Es ist Aufgabe der vorliegenden Erfindung, die Hackfruchttrennvorrichtung verbessert an unterschiedliche Erntebedingungen anpassen zu können, um eine optimale Trennung zu ermöglichen.

Die Aufgabe wird gelöst durch einen Gegenstand gemäß Anspruch 1 sowie durch einen Gegenstand gemäß Anspruch 14. Vorteilhafte Ausgestaltungen der Erfindung sind den Unteransprüchen sowie der nachfolgenden Beschreibung zu entnehmen.

Erfindungsgemäß ist vorgesehen, dass zumindest einem der beiden Förderbänder der Hackfruchttrennvorrichtung wenigstens ein Stellmittel zugeordnet ist, über das wenigstens eine Führungseinheit dieses Förderbandes insbesondere relativ zum Maschinenrahmen dergestalt verstellbar ist, dass sich durch eine Betätigung des Stellmittels die Ausrichtung zweier Teilabschnitte des Förderabschnitts zueinander ändert. Das Stellmittel ist insbesondere Teil der Führungseinheit.

Insbesondere ändert sich die Ausrichtung desjenigen Teilabschnitts, der näher zum anderen, vorzugsweise zum zweiten Förderband liegt. Vorzugsweise handelt es sich um den in Förderrichtung betrachteten zweiten Teilabschnitt des ersten Förderbandes. So wird beispielsweise der Abwurfwinkel des vom ersten Förderband abgeworfenen Ernteguts und somit die Abwurfbahn geändert. Mit veränderter Abwurfbahn variiert der Auftreffpunkt des Ernteguts auf dem zweiten Förderband, welches auch als Feinkrautelevatorband bezeichnet wird. Dies ergibt in Kombination mit einerseits der schwerkraftbedingten Bewegung der Hackfrüchte schräg nach unten sowie den schräg nach oben transportierten Beimengen wie insbesondere Feinkraut eine verbesserte Trennbarkeit des Erntegutstroms in Beimengen und Hackfrüchte. Die auf die Hackfrüchte wirkende, schräge Rampe wird unterschiedlich lang.

Als Ausrichtung wird allgemein der prinzipielle Verlauf des jeweiligen Bandabschnitts in einer Seitenansicht bezeichnet, ungeachtet etwaiger Mitnehmer, Noppen oder das Band unterteilender Elemente. Entsprechend sind die Ausrichtungen der Teilabschnitte des ersten und des zweiten Förderbandes in der Seitenansicht durch zueinander angewinkelte Geraden gekennzeichnet.

Die Trennleistung der Vorrichtung ist ebenfalls dann verbessert, wenn bei einer erfindungsgemäßen Weiterbildung die Schrägstellung des unteren Teilabschnitts des zweiten Förderbandes mittels des Stellmittels vorzugsweise zum oberen Teilabschnitt des zweiten Förderabschnitts variierbar ist. Auch wenn generell eine variierbare Neigung des zweiten Förderbandes bereits an sich bekannt ist, ergibt sich durch die Unterteilung des Förderabschnittes des zweites Förderbandes eine verbesserte Einstellbarkeit im Sinne eines zunächst steileren und dann weniger steilen Anstiegs des Förderbandes beziehungsweise eine Trennung der Anstiege in den beiden Teilabschnitten des zweiten Förderbandes, die eine unterschiedliche Dynamik für die unterschiedlichen Teile des Erntegutes ermöglicht. Hackfrüchte können im steileren Abschnitt verbessert abrollen, während Beimengen wie leichteres Kraut oder Grassoden in einem weniger steilen Abschnitt besser mit- und abtransportiert werden können.

Vorzugsweise wird jeweils beiden Förderabschnitten jeweils eine Führungseinheit zugeordnet, die durch das zumindest eine Stellmittel dergestalt verstellbar sind, dass sich die Ausrichtung zweier jeweiliger Teilabschnitte eines jeweiligen Förderabschnitt zueinander ändert. Die Ausstattung beider Förderbänder mit einer Trennung der jeweiligen Förderabschnitte in zwei unterschiedlichen zueinander angestellten Teilabschnitten verbessert die Anpassbarkeit der Hackfruchttrennvorrichtung an unterschiedliche Erntebedingungen.

Insbesondere ist einerseits der untere Förderabschnitt in seiner Schrägstellung, bezogen auf einen horizontalen Untergrund, variierbar und andererseits der Abwurfwinkel des Ernteguts vom ersten Förderband durch eine Schrägstellung des zweiten Teilabschnitts des ersten Förderabschnitts variierbar. Durch diese Ausbildung kann die Aufgabe des Erntegutstroms auf das zweite Förderband optimal ausgebildet werden, wobei bei konstanter Bandgeschwindigkeit (und identischem Erntegut) der Aufgabepunkt für das Erntegut durch den Anstellwinkel sowohl des zweiten Teilabschnitts des ersten Förderabschnitts als auch des unteren Teilabschnitts des zweiten Förderbandes zumindest 20 cm entlang des unteren Teilabschnitts variieren kann.

Die Umlenkeinheiten des ersten und des zweiten Förderbandes sind beispielsweise Umlenkrollen oder Walzen, die den Bereich, in dem das Material gefördert wird, und mithin ebenfalls die zwischen den Umlenkeinheiten befindlichen Förderabschnitte begrenzen.

Die Verstellung der jeweiligen Führungseinheit erfolgt insbesondere relativ zu einem Maschinenrahmen des jeweiligen Förderbandes, wobei eine Schwenkbeweglichkeit eines gesamten Förderband außer Acht gelassen wird. Eine Betätigung des Stellmittels einer Führungseinheit des zweiten Förderbandes führt zu einer veränderten Position der Führungseinheit unabhängig von einer Verschwenkung des gesamten Förderbandes. Insbesondere das zweite Förderband aber auch das erste Förderband können mit jeweiligen (Teil-)Maschinenrahmen insgesamt verschwenkbar an einem gemeinsamen Maschinenrahmen angeordnet werden, wobei die Führungseinheit sich am (Teil-)Maschinenrahmen oder am gemeinsamen Maschinenrahmen abstützen kann.

Insbesondere ist die obere Umlenkeinheit des zweiten Förderbandes oberhalb eines Abgabepunkts des ersten Förderbandes sowie insbesondere auch oberhalb der dem zweiten Förderband näheren Umlenkeinheit des ersten Förderbandes. Hierdurch wird eine ausreichend lange, schräg nach oben verlaufende Rampe für die zu trennenden Mengen geschaffen.

Es versteht sich, dass die Hackfruchttrennvorrichtung die für einen Antrieb der jeweiligen Förderbänder üblicherweise vorhandenen Antriebsmittel, beispielsweise in Form von Hydraulikmotoren aufweist. Darüber hinaus ist ein Maschinenrahmen der Hackfruchttrennvorrichtung dergestalt ausgebildet, dass er auch Teil des Maschinenrahmens der Hackfruchterntemaschine sein kann, in die eine erfindungsgemäße Hackfruchttrennvorrichtung eingebaut ist.

Vorzugsweise handelt es sich bei den Hackfrüchten um Kartoffeln, es kann sich jedoch auch um andere Hackfrüchte wie beispielsweise Zwiebeln, Radieschen, Möhren oder Rüben handeln.

Eine Führungseinheit wirkt vorzugsweise auf die Seitenbereiche der Förderbänder, beispielweise mittels zweier Führungsrollen auf deren Riemen. Alternativ oder ergänzend erstreckt sich eine Führungseinheit auch beispielsweise über die gesamte Breite eines Förderbandes. Anstelle eines Siebbandes kann es sich bei dem ersten Förderband auch um ein mit einer zumindest überwiegend geschlossenen Förderfläche ausgebildeten Bandförderer handeln.

Das zweite Förderband ist dergestalt ausgebildet, dass es Mitnahmeelemente in Form von Fingern aufweist, die einerseits Feinkraut mitnehmen können, andererseits allerdings so eng beieinander stehen, dass sich das gewünschte Erntegut, beispielsweise Kartoffeln, nicht zwischen den einzelnen Fingern verklemmt. Insbesondere handelt es sich bei dem zweiten Förderband somit um ein Igelband.

Das oder die Stellmittel umfassen für eine jeweilige Führungseinheit insbesondere einen Stellzylinder, der beispielsweise zentral unterhalb des jeweiligen Fördermittels angeordnet ist und auf die Führungseinheit insgesamt wirkt. Es kann sich auch um eine Mehrzahl von Stellmitteln in Form von beispielsweise Stellzylindern handeln, die einer jeweiligen Führungseinheit zugeordnet sind, beispielsweise um seitlich unterhalb von jeweiligen Riemen eines Förderbandes auf die Führungseinheit zu wirken. Als Stellmittel können ebenfalls Linearantriebe beispielsweise mit Schrittmotoren verwendet werden, was insbesondere für eine Elektrifizierung der Hackfruchttrennvorrichtung vorteilhaft ist.

Die Führungseinheiten umfassen insbesondere Führungsrollen, welche vorzugsweise an Schwenkarmen angeordnet sind, welche dann an einem Maschinenrahmen der Hackfruchttrennvorrichtung schwenkbeweglich angeordnet sind.

Insbesondere sind die Schwenkachsen der jeweiligen Führungseinheiten innerhalb eines von zwei durch die Drehachsen der jeweiligen Umlenkeinheiten desselben Förderbandes definierten senkrechten Ebenen zum Untergrund angeordnet und mithin in einer Draufsicht zwischen den jeweiligen Drehachsen. Hierdurch baut die Vorrichtung kompakt. Eine Nachrüstung bereits im Markt befindlicher Maschinen ist einfach möglich.

Vorzugsweise ist die zumindest eine Führungseinheit in eine Richtung zumindest anteilig senkrecht zu einer Ebene durch die Drehachsen der Umlenkeinheiten des jeweiligen Förderbandes bewegbar, so dass ein Förderabschnitt des jeweiligen Förderbandes einen Buckel oder eine Senke ausbildet. Vorzugsweise ist die Führungseinheit aus einer Position, in der der gesamte Förderabschnitt eines jeweiligen Förderbandes im Wesentlichen eine gerade oder schräg verlaufende Ebene ausbildet in eine Richtung zumindest schräg nach oben aus dieser Ebene heraus bewegbar, sodass die jeweiligen Förderabschnitte am Buckel ausbilden, über die dann eine Variation des Abwurfwinkels des Ernteguts beziehungsweise der Schrägstellung des unteren Teilabschnitts des zweiten Förderabschnitts einfach möglich ist.

Durch einen variierbaren Buckel auf dem zweiten Förderband können insbesondere im oberen Teilabschnitt Beimengen in Form von Kraut oder Grassoden gleichmäßiger gefördert werden und rutschen nicht wieder zurück. Leicht rollendes Erntegut kann sich trotzdem den Weg nach unten bahnen. Es ergibt sich somit eine bessere Trennung von Beimengen durch die erfindungsgemäße Hackfruchttrennvorrichtung.

Anstelle einer Führungseinheit, die zwischen den Drehachsen der Umlenkeinheiten angeordnet ist, kann die Führungseinheit in Einzelfällen auch durch eine Umlenkeinheit selbst zumindest mit ausgebildet werden, welche insbesondere schwenkbar am Maschinenrahmen angeordnet ist. Hinsichtlich des ersten Förderbandes handelt es sich hierbei insbesondere um die zweite Umlenkeinheit, d.h. die zum zweiten Förderband hin dichter angeordnete Umlenkeinheit, sodass der Abwurfwinkel sich ändern kann. Zusätzlich umfasst die Führungseinheit in diesem Fall insbesondere noch zwischen der ersten und zweiten Umlenkeinheit des Förderbandes ausgebildete weitere Führungsmittel, über die der erste Teilabschnitt des ersten Förderabschnitts beibehalten werden kann.

Gemäß einer vorteilhaften Ausführung der Erfindung beträgt ein Winkel zwischen durch das Stellmittel einstellbaren, entgegengesetzten Endlagenposition des dem zweiten Förderband nächsten Teilabschnitts des ersten Förderbands zumindest 10° und insbesondere zumindest 20°. Entsprechend ist die durch diesen zweiten Teilabschnitt ausgebildete Transportebene verschwenkbar und der Abwurfwinkel des Ernteguts vom ersten Förderband variiert entsprechend.

Vorzugsweise kann ein Stellmittel zur Verstellung der Führungseinheiten beider Förderbänder ausgebildet sein. Hierdurch kann die Variation der beiden Förderabschnitte der Förderbänder der Hackfruchttrennvorrichtung gemeinsam erfolgen.

Alternativ oder auch ergänzend ist zumindest eine Steuervorrichtung der Hackfruchttrennvorrichtung vorgesehen, die zur Betätigung des oder der Stellmittel ausgebildet ist und die die für die Verstellung notwendigen Signale erzeugt. Dies erfolgt entweder automatisiert auf Basis bestimmter Messgrößen und einer automatisierten Auswertung wie sie insbesondere in der vorbezeichneten DE 102018127845 A1 für den Feinkrautelevator beschrieben wurde oder auch oder alternativ durch Vorgabe durch eine Bedienperson der Erntegutmaschine beziehungsweise der Hackfruchttrennvorrichtung.

Gemäß einer Weiterbildung der Erfindung beträgt ein Winkel zwischen durch das Stellmittel einstellbaren, entgegengesetzten Endlagenpositionen des unteren Teilabschnitts des zweiten Förderbandes zumindest 10°, vorzugsweise zumindest 20°. Entsprechendes kann alternativ oder ergänzend auch für einen oberen Teilabschnitt des zweiten Abschnitts beziehungsweise Förderabschnitts des zweiten Förderbandes gelten.

Allgemein gilt hinsichtlich einer Schrägstellung der Teilabschnitte beziehungsweise der Förderabschnitte, dass es sich hierbei um eine Schrägstellung in einer seitlichen Ansicht auf die Hackfruchttrennvorrichtung beziehungsweise in einer Seitenansicht auf die jeweiligen Förderbänder handelt. Dies gilt jeweils für das erste und das zweite Förderband, wobei die Förderbänder in einer Draufsicht betrachtet parallel zueinander laufende Förderrichtungen im jeweiligen oberen Förderabschnitt aufweisen. Zumindest beträgt in dieser Draufsicht ein Winkel bezüglich der Laufrichtungen der beiden Förderbänder kleiner 60°.

Vorzugsweise ist der untere Teilabschnitt des zweiten Förderbandes steiler ausgebildet als der zweite, obere Teilabschnitt des zweiten Förderbandes. Dies trägt zu der vorstehend beschriebenen Möglichkeit der Beruhigung der abzutransportierenden Beimengen im oberen Teilabschnitt bei. Zumindest gilt dies für einige Stellpositionen des Stellmittels der Führungseinheit des zweiten Förderbandes.

Der dem zweiten Förderband nähere Teilabschnitt des ersten Förderbandes kann in einer erfindungsgemäßen Weiterbildung kürzer ausgebildet sein als der erste Teilabschnitt des ersten Förderbandes, was ebenfalls wieder zumindest für einige Stellpositionen des jeweiligen Stellmittel beziehungsweise der jeweiligen Führungseinheit des ersten Förderbandes gilt. Dies hat den Vorteil, dass die entsprechenden Variationen in einem nur kurzen Abschnitt herbeigeführt werden, während zunächst im ersten Teilabschnitt des ersten Förderabschnitts das auf das erste Förderband geförderten Ernteguts umfassend Beimengen, Kraut und Grassoden sich zunächst beruhigen kann, um dann anschließend gezielt abgeworfen zu werden. Dies trägt zu einer kontrollierteren und somit besseren Einstellbarkeit des Feinkrautelevators bei.

Allgemein kann ein Stellmittel insbesondere als Stellzylinder ausgebildet sein.

Eine erfindungsgemäße Hackfruchterntemaschine weist eine vor- oder nachbeschriebene Hackfruchttrennvorrichtung auf. Dieser Hackfruchterntemaschine kommen die entsprechenden Vorteile der jeweiligen Hackfruchttrennvorrichtung zu.

Weitere Vorteile und Einzelheiten der Erfindung sind der nachfolgenden Figurenbeschreibung zu entnehmen.

Schematisch dargestellt zeigt:
- Fig. 1: einen erfindungsgemäßen Gegenstand in perspektivischer Darstellung,
- Fig. 2: einen erfindungsgemäßen Gegenstand in perspektivischer Darstellung,
- Fig. 3: eine Draufsicht auf den erfindungsgemäßen Gegenstand nach Fig. 2,
- Fig. 4: eine Schnittansicht durch den Gegenstand gemäß Figur 3 in ersten Betriebsstellung,
- Fig. 5: eine Ansicht des Gegenstands nach Figur 4 in einer weiteren Betriebsstellung,
- Fig. 6: eine weitere Ansicht gemäß Fig. 4.

Einzelne technische Merkmale der nachbeschriebenen Ausführungsbeispiele können auch in Kombination mit vorbeschriebenen Ausführungsbeispielen sowie den Merkmalen eines der unabhängigen Ansprüche und etwaiger weiterer Ansprüche zu erfindungsgemäßen Gegenständen kombiniert werden. Sofern sinnvoll werden funktional zumindest in Teilen gleichwirkende Elemente mit identischen Bezugsziffern versehen.

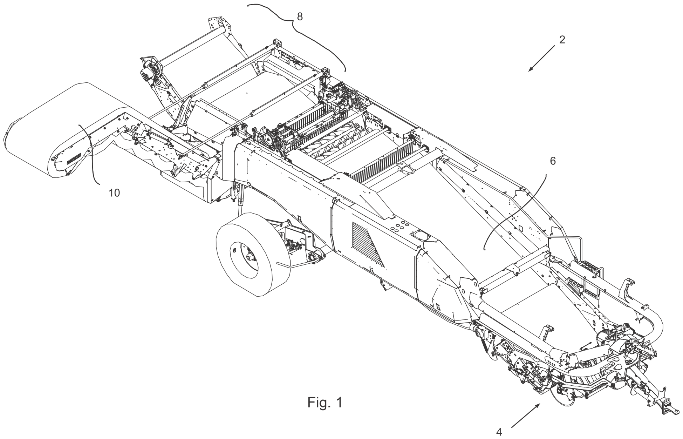

Eine erfindungsgemäße Hackfruchterntemaschine 2 ist gemäß Fig. 1 als gezogener Kartoffelroder ausgebildet. Ausgehend von einer Aufnahme 4 wird das Erntegut über ein Siebband 6, typischerweise ein Stabsiebband, in Richtung einer ebenfalls erfindungsgemäßen Hackfruchttrennvorrichtung 8 transportiert. Über einen Elevator 10 können die Hackfrüchte, vorliegend in Form von Kartoffeln, in ein Bunkerfahrzeug übergeben werden.

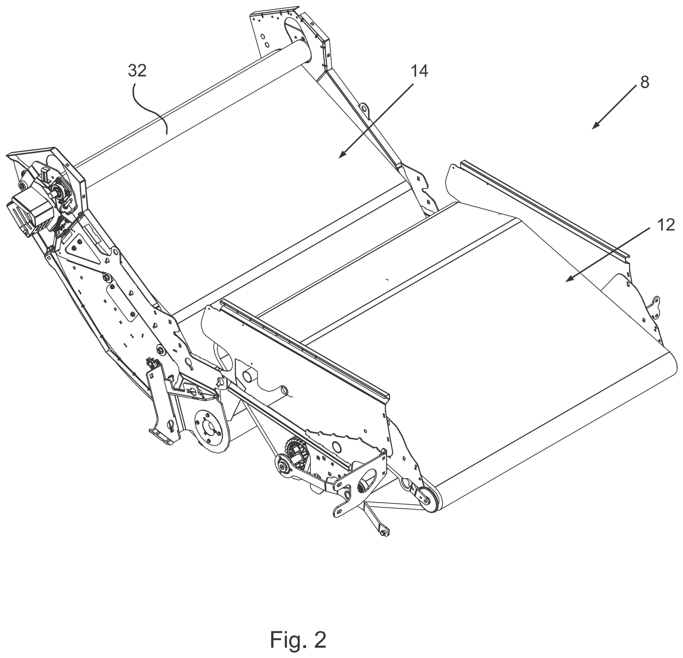

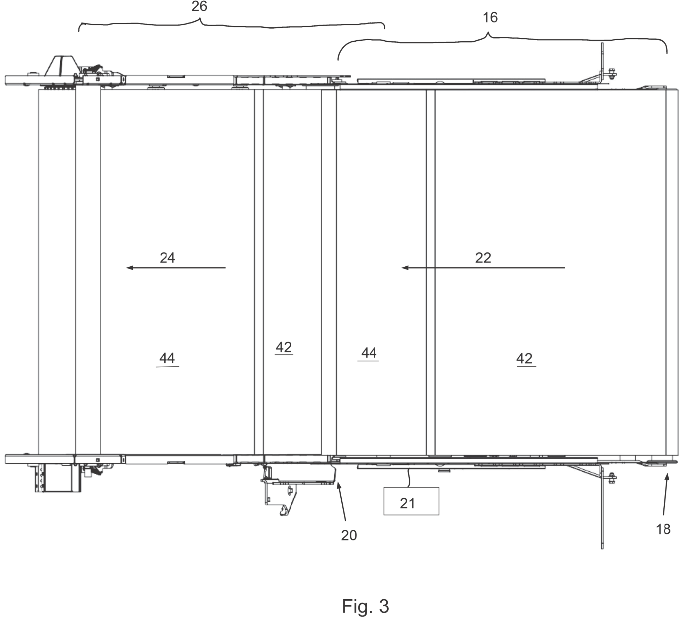

Die erfindungsgemäße Hackfruchttrennvorrichtung 8, die in Fig. 2 alleine einen erfindungsgemäßen Gegenstand darstellt, weist ein erstes Förderband 12 und ein zweites Förderband 14 auf. Das erste Förderband 12 umfasst einen ersten Förderabschnitt 16 zwischen einer ersten Umlenkeinheit 18 und einer zweiten Umlenkeinheit 20. Im Betrieb wird das Erntegut im ersten Förderabschnitt 16 in Richtung der Umlaufrichtung 22 des zweiten Förderbandes 14 transportiert. In der Draufsicht der Fig. 3 entspricht die Förderrichtung der Umlaufrichtung 22 des Förderbandes 14.

Parallel zur Förderrichtung 22 läuft das zweite Förderband 14 in der Draufsicht der Fig. 3 in Richtung 24 um. Das zweite Förderband 14 besitzt einen zweiten Förderabschnitt 26, der in der Draufsicht der Fig. 3 teilweise unterhalb des ersten Förderbandes 12 angeordnet ist und der zwischen einer oberen Umlenkeinheit 28 und einer unteren Umlenkeinheit 30 ausgebildet ist. Insbesondere ist das zweite Förderband 14 ein Igelband. Der zweite Förderabschnitt 26 ist zum Untergrund schräg gestellt (Fig. 2). Im zweiten Förderabschnitt 26 wird im Betrieb ein Teil des Ernteguts in Form von Kraut oder Grassoden nach oben transportiert und von einer Einzugsrolle 32 erfasst und zwischen Igelband und Einzugsrolle 32 eingezogen. Erntegut fällt in Richtung zum Untergrund nach unten, was nachfolgend noch beschrieben wird.

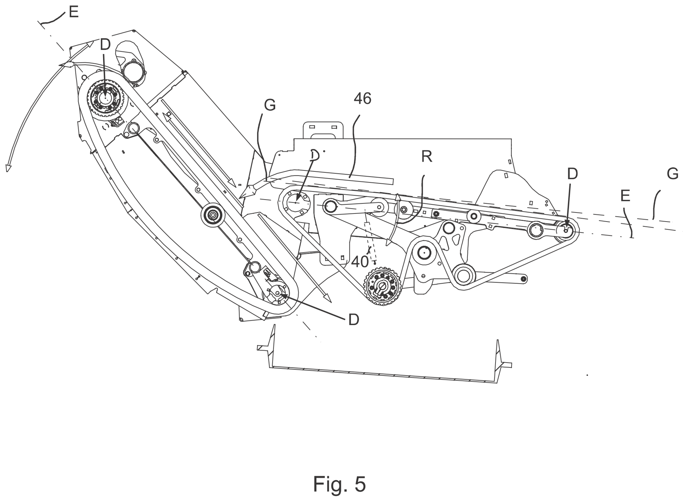

Erfindungsgemäß ist beiden Förderbändern 12 und 14 jeweils eine Führungseinheit 34 zugeordnet, die jeweilige Führungsrollen 36 zum Führen des jeweiligen Förderbandes 12, 14 aufweisen. Ebenfalls weisen beide Führungseinheiten 34 am Maschinenrahmen 3 schwenkbar gelagerte Schwenkarme 38 auf, über die die Führungsrollen 36 anteilig in eine Richtung senkrecht zu einer Ebene E, welche durch die Drehachsen D der Umlenkeinheiten 18 und 20 bzw. 28 und 30 der jeweiligen Förderbänder verläuft, bewegbar sind. (vgl. Fig. 5).

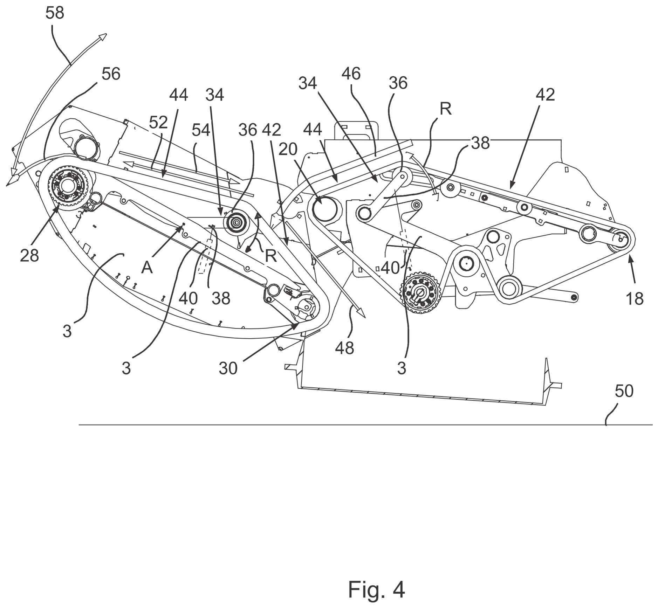

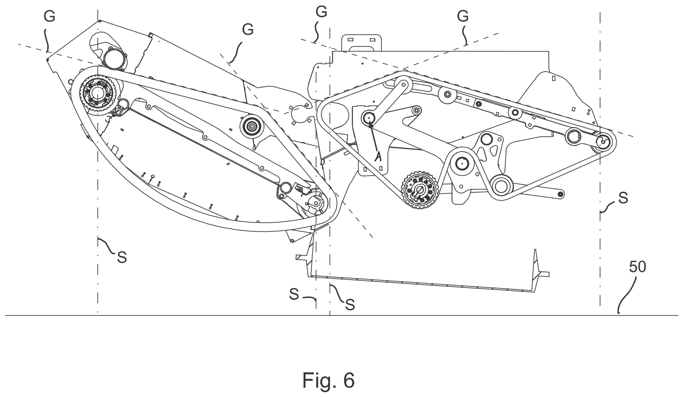

Jeder Führungseinheit ist ein schematisch dargestelltes Stellmittel 40 zugeordnet, über das der jeweilige Schwenkarm 38 in Richtungen R bewegt wird und welches sich am Maschinenrahmen 3 abstützt. Durch eine Betätigung des Stellmittels 40 ändert sich die Ausrichtung zweier Teilabschnitte 42, 44 der Förderabschnitte 16, 26 zueinander und insbesondere die Ausrichtung des zum anderen Förderband 12,14 näher gelegenen Teilabschnittes 44 des ersten Förderbandes 12 und des Teilabschnittes 42 des zweiten Förderbandes 14. Als Ausrichtung wird allgemein der prinzipielle Verlauf des jeweiligen Bandabschnitts in der Seitenansicht beispielsweise der Fig. 4 oder 5 bezeichnet, ungeachtet etwaiger Mitnehmer, Noppen oder das Band unterteilender Elemente. Entsprechend sind die Ausrichtungen der Teilabschnitte 42, 44 des ersten und des zweiten Förderbandes 12, 14 in der Seitenansicht durch zueinander angewinkelte Geraden G gekennzeichnet (Fig. 6).

Alternativ oder ergänzend könnte auch die zweite Umlenkeinheit 20 eine schwenkbar an einem Maschinenrahmen angeordnete Führungseinheit ausbilden.

Durch die Verschwenkung der Schwenkarme 38 ändert sich die Position der Laufrollen 36 der Führungseinheiten und die Förderbänder 12, 14 bilden unterschiedlich starke Buckel aus, so dass vom ersten Förderband 12 angefördertes und mit dem Pfeil 46 gekennzeichnete Erntegut nach dem Aufprallen auf dem unteren Teilabschnitt 42 des zweiten Förderbandes 14 in zwei Teilgutströme aufteilt. Ein erster Gutstrom 48 aus Hackfrüchten rollt schwerkraftbedingt in Richtung eines Untergrunds 50, während ein zweiter Gutstrom aus Beimengen und gegebenenfalls leichteren Hackfrüchten nach oben transportiert wird (Pfeil 52). Leichtere Hackfrüchte rollen gleichwohl entsprechend Pfeil 54 wieder in Richtung Untergrund 50. Pfeil 56 charakterisiert die dann abgeförderten Beimengen.

Die Führungseinheiten 34 und ebenfalls deren Schwenkachsen A, die wie auch die Drehachsen D senkrecht zur Figurenebene der Fig. 4 bis 6 verlaufen, sind zwischen zwei senkrecht zum Untergrund 50 durch die Drehachsen D der jeweiligen Umlenkeinheiten 18 und 20 bzw. 28 und 30 verlaufenden Ebenen S angeordnet

Die Teilabschnitte 42 und 44 der Förderabschnitte 16 und 26 befinden sich in den Fig. 4 und 6 in einer Endlagenposition, in der die Stellmittel 40 maximal ausgefahren sind. In der Fig. 5 ist die entgegengesetzte Endlagenposition mit vollständig eingefahrenen Stellmitteln 40 abgebildet. Der Winkel zwischen der Geraden G des zweiten und in der Figur 5 linken Teilabschnitts 44 des ersten Förderbandes 12 und der Gerade G des zweiten und in der Figur 6 linken Teilabschnitts 44 des ersten Förderbandes 12 beträgt rund 25°. Der entsprechende Unterschied zwischen den Endlagenpositionen des ersten Teilabschnitts des zweiten Förderbandes 14 beträgt 10°

Zusätzlich zu den erfindungsgemäßen Verstellmöglichkeiten ist das zweite Förderband 14 insgesamt gemäß Pfeil 58 verschwenkbar. Die Ansteuerung der Stellmittel 40 wird über eine Steuervorrichtung 21 umgesetzt, die Teil einer Maschinensteuerung der Hackfruchterntemaschine 2 sein kann (Fig. 2).

## Patentansprüche

1. Hackfruchttrennvorrichtung, insbesondere Feinkrautelevator, zur Trennung eines Gutstroms in Kraut und Hackfrüchte, umfassend ein insbesondere als Siebband ausgebildetes erstes Förderband (12), das an einem Maschinenrahmen (3) der Hackfruchtrennvorrichtung gelagert ist und das einen ersten Förderabschnitt (16) zwischen einer ersten Umlenkeinheit (18) und einer zweiten Umlenkeinheit (20) ausbildet, wobei im Betrieb im ersten Förderabschnitt (16) das auf dem ersten Förderband (12) aufliegende Erntegut in Richtung eines zweiten, am Maschinenrahmen (3) insbesondere schwenkbeweglich gelagerten Förderbandes (14) der Hackfruchttrennvorrichtung gefördert wird, wobei das zweite Förderband (14), insbesondere ein Igelband, zwischen einer oberen und einer unteren Umlenkeinheit (28,30) einen schräg gestellten zweiten Förderabschnitt (26) ausbildet, wobei im Betrieb ein Teil des Ernteguts insbesondere in Form von Kraut von dem umlaufenden zweiten Förderband (14) entgegen der Schwerkraft den zweiten Förderabschnitt (26) hoch gefördert und ein weiterer Teil des Ernteguts insbesondere in Form von Hackfrüchten sich schwerkraftbedingt entgegen der Bewegung des zweiten Förderbandes nach unten bewegt, **dadurch gekennzeichnet, dass** zumindest einem der beiden Förderbänder (12,14) wenigstens ein Stellmittel (40) zugeordnet ist, über das wenigstens eine Führungseinheit (34) dieses Förderbandes (12,14) insbesondere relativ zum Maschinenrahmen (3) dergestalt verstellbar ist, dass sich durch eine Betätigung des Stellmittels (40) die Ausrichtung zweier Teilabschnitte des Förderabschnitts (16, 26) zueinander und insbesondere die Ausrichtung des zum anderen Förderband (12,14) näher gelegenen Teilabschnittes (44, 42) ändert.

2. Hackfruchttrennvorrichtung nach Anspruch 1, **dadurch gekennzeichnet, dass** beiden Förderabschnitten (16, 26) jeweils eine Führungseinheit (34) zugeordnet ist, die durch das zumindest eine Stellmittel (40), insbesondere durch ein jeweiliges Stellmittel (40), dergestalt verstellbar sind, dass sich die Ausrichtung zweier jeweiliger Teilabschnitte (42,44) der Förderabschnitte (16, 26) zueinander ändert.

3. Hackfruchttrennvorrichtung nach einem der vorherigen Ansprüche, **dadurch gekennzeichnet, dass** die zumindest eine Führungseinheit (34) in eine Richtung zumindest anteilig senkrecht zu einer Ebene (E) durch die Drehachsen (D) der Umlenkeinheiten (18, 20, 28,30) des jeweiligen Förderbandes (12, 14) bewegbar ist.

4. Hackfruchttrennvorrichtung nach einem der Ansprüche 1 oder 2, **dadurch gekennzeichnet, dass** die Führungseinheit (34) durch eine Umlenkeinheit (20) zumindest mit ausgebildet wird, welche insbesondere schwenkbar am Maschinenrahmen (3) angeordnet ist.

5. Hackfruchttrennvorrichtung nach einem der vorherigen Ansprüche 1 bis 3, **dadurch gekennzeichnet, dass** die Führungseinheit (34) schwenkbar am Maschinenrahmen (3) angeordnet ist, insbesondere wobei die Schwenkachse der Führungseinheit (34) zwischen zwei senkrecht zum Untergrund durch die Drehachsen (D) der jeweiligen Umlenkeinheiten verlaufenden Ebenen S angeordnet ist.

6. Hackfruchttrennvorrichtung nach einem der vorherigen Ansprüche, **dadurch gekennzeichnet, dass** ein Winkel zwischen durch das Stellmittel (40) einstellbaren, entgegengesetzten Endlagenpositionen des dem zweiten Förderband (14) nächsten Teilabschnitt (44) des ersten Förderbandes (12) zumindest 10° und insbesondere zumindest 20° beträgt.

7. Hackfruchttrennvorrichtung nach einem der vorherigen Ansprüche, **dadurch gekennzeichnet, dass** das Stellmittel (40) zur Verstellung der Führungseinheiten (34) beider Förderbänder (12, 14) ausgebildet ist.

8. Hackfruchttrennvorrichtung nach einem der vorherigen Ansprüche, **dadurch gekennzeichnet, dass** ein Winkel zwischen durch das Stellmittel (40) einstellbaren, entgegengesetzten Endlagenpositionen des unteren Teilabschnitts (42) des zweiten Förderbandes (14) zumindest 10° beträgt.

9. Hackfruchttrennvorrichtung nach einem der vorherigen Ansprüche, **dadurch gekennzeichnet, dass** der untere Teilabschnitt (42) des zweiten Förderbandes (12) steiler ausgebildet ist als der obere Teilabschnitt (44) des zweiten Förderbandes.

10. Hackfruchttrennvorrichtung nach einem der vorherigen Ansprüche, **dadurch gekennzeichnet, dass** der dem zweiten Förderband (14) nähere Teilabschnitt (44) des ersten Förderbandes (12) kürzer ausgebildet ist als der erste Teilabschnitt (42) des ersten Förderbandes (12).

11. Hackfruchttrennvorrichtung nach einem der vorherigen Ansprüche, **gekennzeichnet durch** zumindest eine Steuervorrichtung (21) der Hackfruchtrennvorrichtung (8) zur Betätigung des oder der Stellmittel (40).

12. Hackfruchttrennvorrichtung nach einem der vorherigen Ansprüche, **dadurch gekennzeichnet, dass** die Führungseinheiten (34) Führungsrollen (36) umfassen, welche insbesondere an Schwenkarmen (38) angeordnet sind.

13. Hackfruchtrennvorrichtung nach einem der vorherigen Ansprüche, **dadurch gekennzeichnet, dass** die Stellmittel (40) zumindest einen Stellzylinder aufweisen.

14. Hackfruchterntemaschine, umfassend eine Hackfruchttrennvorrichtung (8) nach einem der vorherigen Ansprüche.
